# EUROPEAN PATENT APPLICATION

(11) **EP 1 752 393 A2**
(43) Date of publication of application: **14.02.2007**
(21) Application number: 06254122.2
(22) Date of filing: 07.08.2006
(51) Int. Cl.: B65F 9/00, B65F 3/28, B60P 1/00

(54) **Material and waste transportation**

(30) Priority: 10.08.2005 GB 0516459
(71) Applicant: Sumpter, Derek Edward, Shorne, Gravesend DA12 3HG (GB)
(72) Inventor: Sumpter, Derek Edward, Shorne, Gravesend DA12 3HG (GB)
(74) Representative: Jenkins, Peter David

(57) **Abstract**

A trailer (11) for an articulated lorry (10), the trailer including an enclosed elongate material-carrying container (13), the container having a walking floor (73), a rear wall (17) and two side walls (14) and a front access door (12), and a roof (16) which permits material to be loaded from above downwardly into the container and onto the walking floor, the walking floor comprising a plurality of parallel longitudinal slats (75,76,77), each adapted to move back and forth with a reciprocating motion over a respective pitch distance, the walking floor further comprising a movement detector (81) for detecting movement of at least one of the longitudinal slats over the respective pitch distance.
Furthermore, a waste collection system in a premises receiving such a trailer (11), comprises a control system (100) that is fitted in the premises.

## Description

The present invention relates to material and waste transportation, in particular including an improved routine for delivery of newsprint and the removal of waste paper and apparatus for use in such a routine and other situations.

Transportation of goods by road is normally conducted using large articulated lorries having a trailer hauled by a tractor unit. Typically, having delivered its load, the lorry returns to its home depot empty. This is wasteful of driver and vehicle time, being a period of zero productivity, and is also a waste of fuel, thus raising environmental concerns. The government is keen to encourage hauliers to use full trailers on the return leg of each journey. However, whilst being an admirable aim, it is, in practice, difficult to achieve, for several reasons. Products made by the concern to whom the delivery was made may not require transportation of its own goods in the direction of the lorry's home depot. Furthermore, trailers may be designed specifically for transporting a certain type of product and are not readily adaptable to carrying other goods.

In the newsprint industry, reels of newsprint are typically delivered to a printing works on a trailer with fabric side curtains carried upon a steel frame, typically known as a "Tautliner". Printing works produce a great deal of waste paper. Typically, on a continuous basis as it is produced, a compactor unit compresses waste paper into a 6 m (20 foot) long bin. Typically, two bins are transported for disposal or recycling upon a single trailer. The trailer will be different from that used to deliver the newsprint. Typically, approximately six of these bins are required to contain the waste generated at a newspaper printing works from processing the newsprint of a single delivery of a typical 13m trailer. Each bin in turn must be mounted upon and demounted from the trailer using a hook lift vehicle before the contents can be disposed of. The system is generally similar to that disclosed in my GB 2 307 895A. This procedure is unduly time consuming involving many movements of bins. This additionally produces a considerable amount of noise.

My earlier application EP-A-1061012 already considers this problem and describes a material delivery and waste collection system for a premises; the system comprising (i) providing at least two, wheeled, enclosed elongate material-carrying containers each having a floor, walls, a roof and an access door mounted within a frame at the rear of the container; (ii) providing the premises with a delivery bay for transfer of materials .from the rear of a first container into the premises; and (iii) providing the premises with at least one waste collection bay; wherein the waste collection bay includes a compactor unit having an input adapted to receive waste material and an output for expulsion of the waste material; the system comprising mutually cooperating connecting means provided on the compactor units and on the rear of the second container; the connecting means providing a substantially rigid connection between the output of the compactor unit and the container. Preferably, the wheeled container is in the form of a trailer of an articulated lorry. EP-A-1061012 also describes a trailer for an articulated lorry adapted for use in the system described above. The rear of the trailer comprises cooperative means for connecting the trailer to the output of a compactor unit.

A problem with the system and trailer of EP-A-1061012 is that a compacter unit is still required.

In order to solve that problem, I devised the material delivery and waste transportation system disclosed in EP-A-1120363. That specification discloses a trailer for an articulated lorry which comprises an enclosed elongate material-carrying container having a walking floor, a rear and two side walls, a roof and a front access door; wherein the interior surfaces of the walls and roof are substantially flat and un-interrupted and wherein the interior of the trailer includes a moveable wall or headboard which is advanceable between a position adjacent the access door in which the capacity of the container is at a minimum and a position remote the access door in which the capacity of the container is at a maximum. The trailer further comprises a door in the roof of the vehicle which selectively covers an aperture in the roof, which is generally adjacent the access door. Preferably, a sheet, typically of canvas, is attached to the bottom edge of the headboard.

The term walking floor means a floor comprising a plurality of parallel longitudinal floor elements or slats arranged to reciprocate so as to produce a walking effect, whereby an article placed upon the floor is caused to advance in a chosen direction. Known walking floors are typically controlled by a wand or a remote control device which simply switches the walking floor on and off in a load or unload operation, based on a visual input of the location of the load within the container from the operator.

There is also disclosed a material delivery and waste transportation system incorporating at least two of such trailers.

The trailer is adapted to be operable in a material delivery configuration and a waste collection configuration. For the waste collection configuration, waste material is dropped through the aperture in the roof.

Initially, the headboard is at a position spaced from the access door so as to define a cavity therebetween. A hopper discharges waste paper though the open aperture in the roof into the cavity of the trailer where it falls upon the canvas sheet. The weight of waste falling on the canvas sheet acts, since the canvas sheet is attached to the base of the headboard, to prevent the headboard being pushed towards the rear of the trailer as the mass of waste accumulates.

As the cavity becomes full, one or more sensors mounted about the aperture trigger a control mechanism which actuates the walking floor for a predetermined time to move the contents of the cavity towards the rear wall thereby enlarging the cavity. The process is repeated with the headboard indexing backwardly towards the rear wall of the trailer until the container is substantially full. Typically, this involves 5 or 6 indexing steps, depending upon the dimensions of the trailer.

EP-A-1410947 discloses improvements to the material delivery and waste transportation system disclosed in EP-A-1120363.

EP-A-1410947 discloses that the trailer further comprises a control system including actuating means for the walking floor. The control system is on-board the trailer and is powered by an electricity supply at the user's site. The actuating means comprises sensing means sensing when contents within the container reach a predetermined condition and outputting a signal in response thereto, and powering means causing operation of the walking floor for a predetermined period in response to the signal from said sensing means, to advance the contents towards the rear of the container. Typically, the powering means comprises an electrically powered pump, suitably a hydraulic or pneumatic pump.

The predetermined period of operation of the walking floor is dependent upon the nature of the contents of the container and is suitably controlled by means of a computer. Accordingly, the control system further comprises a programmer unit, by means of which the period of operation of walking floor can be set. For example, if the container is being filled with heavy, dense paper, the walking floor will be operated, typically in short steps. A lighter, less dense material will typically be moved in larger, and thus less frequent but longer, steps. The duration may be programmed directly by means of a numeric keypad. In the preferred embodiments, the programmer will be pre-programmed with a number of pre-set specific programmes such that, for example, a user has a choice of, perhaps, three selector keys, one of dense material, one for light material and another for mixed material, for instance.

Although, the trailer with the on-board control system disclosed in EP-A-1410947 provides improved operation as compared to my earlier trailer, and facilitates the operation of the system by a user, there is still a need to provide improvements in the manner that the walking floor is controlled and operated to ensure reliable and efficient operation of the trailer in the waste collection configuration.

The present invention aims at least partially to meet this need.

Accordingly, in a first aspect the present invention provides a trailer for an articulated lorry, the trailer including an enclosed elongate material-carrying container, the container having a walking floor, a rear wall and two side walls and a front access door, and a roof which permits material to be loaded from above downwardly into the container and onto the walking floor, the walking floor comprising a plurality of parallel longitudinal slats, each adapted to move back and forth with a reciprocating motion over a respective pitch distance, the walking floor further comprising a movement detector for detecting movement of at least one of the longitudinal slats over the respective pitch distance.

Preferably, the movement detector comprises a contact switch positioned to be switched by movement of the at least one of the longitudinal slats.

Preferably, the movement detector is positioned so as to contact at least one member connected to the at least one of the longitudinal slats beneath the walking floor.

Preferably, the at least one member comprises an interconnecting member connecting together a plurality of first slats extending transversely across the width of the walking floor.
Preferably, the movement detector comprises a rotatable contact switch.

Preferably, the trailer further includes an internal moveable wall or headboard which is advanceable between a position adjacent the access door in which the capacity of the container is at a minimum and a position remote the access door in which the capacity of the container is at a maximum.

The trailer may further comprise sensing means for sensing when contents within the container reach a predetermined condition and outputting a signal in response thereto, and powering means for causing operation of the walking floor to advance the contents towards the rear of the container.

Preferably, the sensing means are provided on one or more internal walls of the trailer.

Preferably, the powering means comprises an electrically operated hydraulic pump.

In a second aspect, the present invention provides a waste collection system in a premises, the system comprising a waste collection bay for receiving a trailer for an articulated lorry, means for loading waste material downwardly into a container of the trailer; and a control system for controlling the operation of a walking floor of the container, the control system being fitted in the premises and comprising a programmer unit for presetting at least one operational mode of the walking floor of the container, and a user interface comprising at least one mode-selector switch for selecting a respective operational mode of the walking floor of the container.

Preferably, the at least one operational mode corresponds to a total distance to be moved by the walking floor in a single movement operation thereof.

Preferably, the programmer unit is programmed whereby a respective total number of reciprocal movements of the walking floor in a single movement operation thereof has been pre-programmed into the programmer unit for the at least one operational mode.

Preferably, the control system further comprises an input for receiving a signal from a movement detector for detecting reciprocal movement of at least one longitudinal slat of the walking floor over a pitch distance.

Preferably, the control system further comprises a counter for counting the number of reciprocal movements of the walking floor, based on the signal from the movement detector.

Preferably, the user interface further comprises at least one indicator for indicating the filling status of the container.

The above and other aspects of the present invention will now be described in further detail by way of example only with reference to the accompanying drawings, in which:
Figure 1 is a rear view of a trailer in accordance with an embodiment of the present invention;
Figure 2 is a side view of the trailer of Figure 1;
Figure 3 is a part cut-away side view of the trailer of Figure 1;
Figure 4 is a part cut-away plan view of the trailer of Figure 1;
Figure 5 a detailed plan view of a portion of the walking floor of the trailer of Figure 1;
Figure 6 illustrates schematically the features of a control system for the trailer of Figure 1;
Figure 7 is a schematic plan view of a system for loading the trailer of Figure 1; and
Figures 8 (a) to (f) show, in six side views, sequential steps taken during the loading of the trailer of Figure 1.

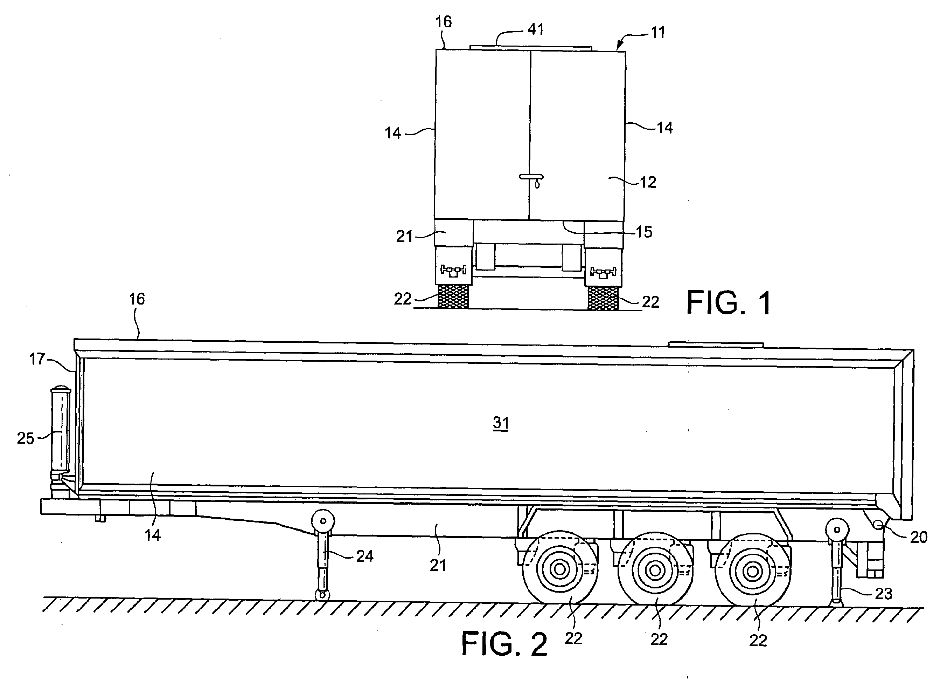

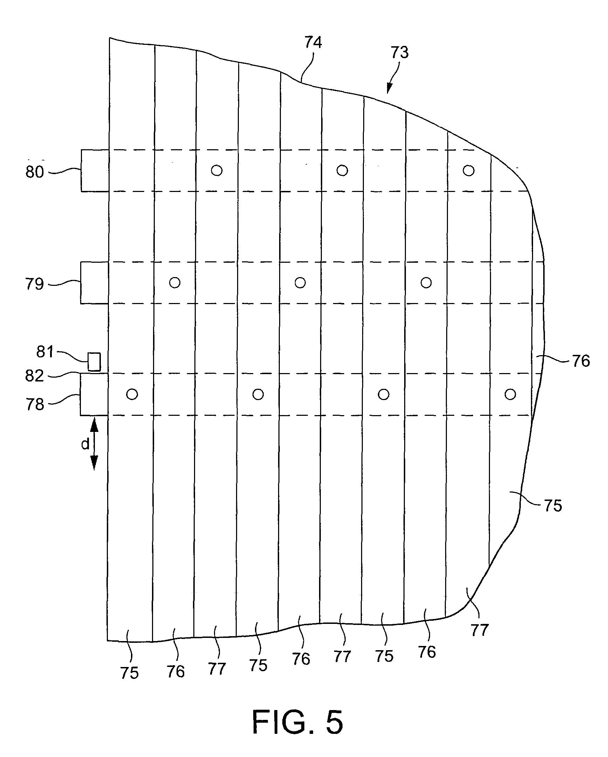

With reference to Figures 1 to 4, the trailer, shown generally at 11, for a lorry tractor unit 10 (Figure 5) will be explained. Firstly, it will be helpful to define that in the context of trailers, the terms 'front' and 'rear' are with respect to the conventional access doors 12, which are taken to be at the front of the trailer. The trailer 11 comprises a container 13 defined by two side walls 14, floor 15, roof 16, rear wall 17 and the front doors 12.

Many features of the trailer 11 are largely conventional and do not need to be described in further detail. Indeed, this is a particular advantage of the present system and trailer. The container 13 is mounted for pivotal movement about an axial horizontal axis 20 upon a chassis 21. Chassis 21 includes additional conventional trailer components such as three pairs of road wheels 22 and front 23 and rear 24 support legs for use when the trailer is not coupled to a tractor unit. Pivotal movement is actuated by means of a pneumatic or hydraulic piston 25, generally vertically mounted but adapted to pivot as required during extension thereof and thus pivoting of the container 13.

One embodiment of a container 13 is shown in Figure 2 and is typically formed from 5mm aluminium alloy plate and is clad externally with an appropriate sheet material 31. The use of aluminium means that the container is equally suitable for the transportation of grain/cereals. Indeed the inventive system will find use in the delivery of products to, for example, supermarkets. Supermarkets produce a large quantity of paper and cardboard waste which is presently compacted into small containers in the same manner as in the waste newsprint industry. In this regard, it will be apparent that the trailer could also be refrigerated.

Typically, the container 13 is around 13m long, 2.55m wide and 2.5m tall.

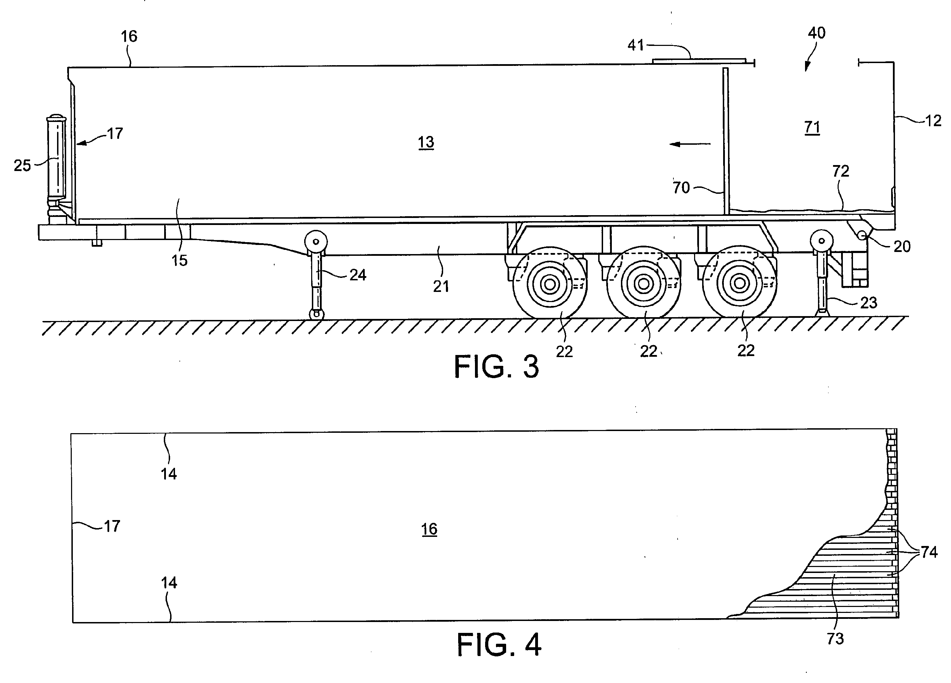

As is most clearly seen from Figure 3, the roof 16 of the trailer includes a hatch comprising an aperture 40 coverable by a horizontally sliding cover 41. Further details of trailers of this type can be found in our earlier patent application, EP-A-1120363. However, the roof 16 may simply comprise a fully or partly retractable, or completely removable, flexible sheet. The roof 16 is configured to provide access from above into the cavity of the trailer adjacent the front doors 12, to permit waste to be dropped into the trailer in a waste collection phase, and to cover the contents of the container at least during the material delivery phase.

Within the trailer is transverse wall or headboard 70 (Figure 3) which is arranged by suitable means to be advanceable towards the rear wall 17 of the trailer in the direction shown by the arrow in Figure 3. The headboard 70 divides the container 13 to form a cavity 71 with the front of the trailer (namely with the doors 12). Attached to the headboard 70 at its lower edge is a strong canvas sheet 72. The canvas sheet 72 is dimensioned such that when the headboard 70 is in its initial position just rearward of the aperture 40 (as shown in Figure 3), the canvas extends from the headboard to the doors 12 of the trailer. Thus the area of the canvas sheet 72 corresponds with the initial floor area of the cavity 71.

The floor of the trailer is provided with a walking floor 73 of the type described above. The walking floor comprises a series of parallel longitudinal slats 74. The slats 74 are arranged to move back and forth with a reciprocating motion, alternate slats 74 moving in opposite directions. Such floors are well known in the art.

A particularly preferred walking floor is shown in Figure 5. This walking floor 73 has been adapted as compared with known walking floors so as to provide a movement counter in accordance with one aspect of the present invention.

Referring to Figure 5, the walking floor 73 comprises an alternating sequence of first, second and third alternating slats 75, 76, 77. Typically, there are seven of each slat 75, 76, 77, making a total of twenty one slats across the width of the walking floor 73. Other configurations of walking floor may alternatively be used in accordance with the present invention. All of the first alternating slats 75 are interconnected together by an interconnecting member 78, typically comprising a beam located under the walking floor 73 and extending transversely across the width of the walking floor 73. Similarly, all of the second alternating slats 76 are interconnected together by an interconnecting member 79, and all of the third alternating slats 76 are interconnected together by an interconnecting member 80. Each interconnecting member 78, 79, 80 is driven by being moved a predetermined pitch distance, d, in a selected direction, forwards or backwards, in either a movement cycle, for moving a load carried by the walking floor 73, or a return cycle, for returning the walking floor 73 to its position prior to the movement cycle without moving the load.

In a movement cycle, all three interconnecting members 78, 79, 80 are simultaneously moved in the same longitudinal direction by the pitch distance, d. This causes all of the first, second and third alternating slats 75, 76, 77, and therefore the entire walking floor 73, and the load carried thereon, to be simultaneously moved in that direction. If there is no slippage between the load and the walking floor 73, the load also moves the same pitch distance, d. However, if there is some slippage between the load and the walking floor 73, which is typically the case when the load is waste paper, the load moves a distance which is less than the pitch distance, d. The actual distance moved by the load, and the degree of slippage, varies depending on the nature of the material and the amount of material within the cavity, and, for waste paper, generally needs to be determined on a trial and error basis.

In a return cycle, following a movement cycle, the three interconnecting members 78, 79, 80 are independently and consecutively moved in the same longitudinal direction by the pitch distance, d, but in the opposite direction to that in the movement cycle. Thus, initially the first slats 75 are moved back to their original position by moving them the pitch distance, d. Subsequently, the second slats 76 are moved back to their original position by moving them the pitch distance, d. Finally, the third slats 77 are moved back to their original position by moving them the pitch distance, d. In the return cycle, since only a proportion of the slats 75, 76, 77 of the walking floor 73 are moved at any given time, the frictional force applied to the load by the moving slats is insufficient to move the load, and so the slats slip against the load. Accordingly, the load does not move in the return cycle. At the end of the return cycle the slats are in the same position as at the beginning of the movement cycle, and ready for a subsequent movement cycle.

In a subsequent movement cycle, the load is again moved a distance corresponding to the pitch distance, d, or portion of that pitch distance which depends on the degree of slippage between the load and the walking floor 73.

In accordance with one aspect of the invention, a movement detector is provided to detect the movement of the walking floor 73. The movement detector can detect the commencement or termination of a movement cycle or a return cycle, and therefore can act as a counter for counting the number of movement cycles of the walking floor 73. This in turn permits the total movement of the walking floor 73 to be determined, which is product of the pitch distance d multiplied by the number of movement cycles, and the total movement of the load carried by the walking floor 73, which is a proportion, up to 100%, of the total movement of the walking floor 73, depending on the degree of slippage of the load relative to the walking floor 73 in the movement cycles.

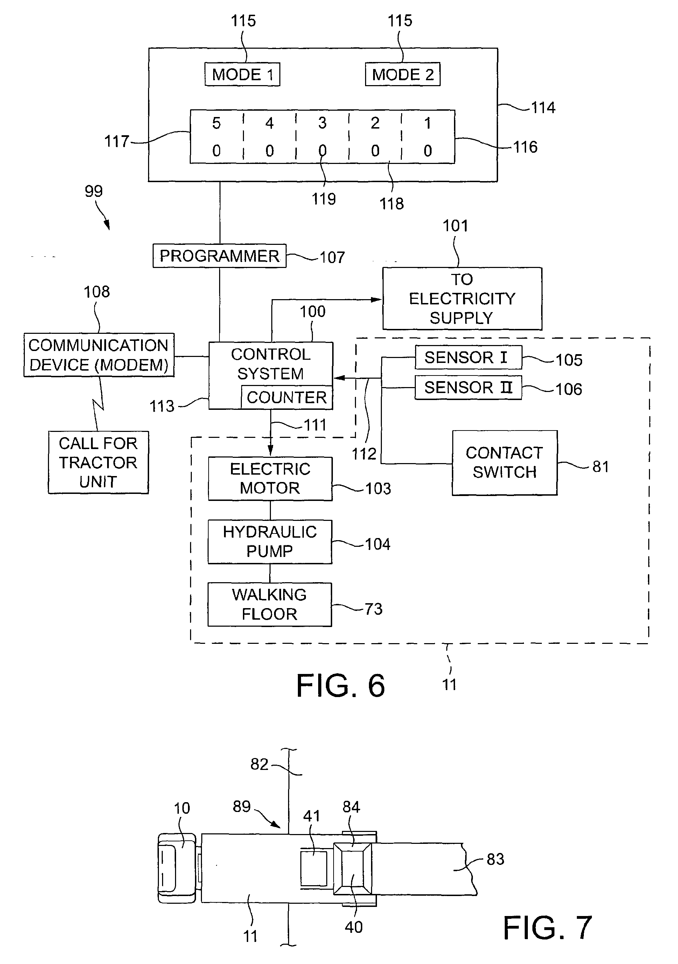

The displacement measure comprises a contact switch 81 which is positioned to detect the movement of one of the interconnecting members 78, 79, 80. The contact switch 81 is an electromechanical rocker switch. The contact switch 81 is located at one longitudinal end 82 of the displacement pitch, d, of the interconnecting member 78. Prior to movement of the interconnecting member 78, the interconnecting member 78 bears against the contact switch 81 and biases it into a contact position. Therefore the contact switch 81 detects the presence of the interconnecting member 78. When the interconnecting member 78 moves away from the contact switch 81, the contact switch 81 is released into a release position. After the combination of one movement cycle and one return cycle, the interconnecting member 78 is moved back into contact with the contact switch 81. In this way, the contact switch 81 can detect that the walking floor 73 has been moved by one movement cycle/return cycle combination, and sends a signal to a counter 110 (see Figure 6) connected to or in a control system 100 to count one pitch of forward and return movement of the walking floor 73. Such a contact switch is inexpensive, and durable and reliable.

If there is no slippage between the load and the walking floor 73, the load also moves the same pitch distance, d. However, if there is some slippage between the load and the walking floor 73, which is typically the case when the load is waste paper, the load moves a distance which is less than the pitch distance, d. The actual distance moved by the load, and the degree of slippage, varies depending on the nature of the material and the amount of material within the cavity, and, for waste paper, generally needs to be determined on a trial and error basis.

The present invention in another aspect relates to a control system for controlling the walking floor. Referring to Figure 6, the control system 100 is mounted remote from the trailer 11 at a user's site 99. The control system 100 is connected to the trailer 11 by two cables 111, 112. The first cable 111 is a power supply cable for providing an electrical power supply for powering the walking floor 73, in particular for powering a motor 103 for driving a hydraulic pump 104 which, in turn, actuates the walking floor 73. The second cable 112 is a control cable for controlling the operation of the walking floor 73.

As well as the contact switch 81, the trailer includes a plurality of sensors 105, 106 within the container of the trailer 11 to monitor the filling condition of the container. The sensors are mounted at various points in the upper regions of the container and will be described further below. The contact switch 81 and the sensors are connected to the control system 100 by the second cable 112.

In response to a signal from a Sensor I 105 mounted in the vicinity of the opening through which waste is fed into the cavity 71, triggered when the level of waste reaches the height of the sensor, control system 100 causes operation of electric motor 103, thence hydraulic pump 104 and so walking floor 73. When the Sensor I is triggered, the walking floor 73 is actuated to move a preset distance, by being actuated to move a predetermined number of successive movement cycles, each having a pitch distance d. As described above, each movement cycle is detected by the contact switch 81. This sends a signal to the control system 100, which counts, in a counter 113, the signals from the contact switch 81. When the preset number of movement cycles has been counted, the control system 100 terminates the operation of the walking floor 73.

The preset distance corresponds to a movement distance of the walking floor 73 in one indexing step. This relates, subject to slippage losses as discussed above, to a movement distance of the load, and consequently the headboard, in the indexing step. Successive indexing steps are carried out until the container is full. When Sensor I detects that the level of material in the cavity 71, in the vicinity of the location at which the container is being filled, is at a maximum, a first indexing step is initiated. When Sensor I next detects that the level of material in the cavity 71, in the vicinity of the location at which the container is being filled, is at a maximum, a second indexing step is initiated. This sequence of indexing steps continues until the container is completely full.

A second sensor, Sensor II 106 detects when the container is completely full. Alternatively, detection of a "full" status is achieved by programming of the control system 100. By monitoring the position of the headboard 70, the control system 100 can use a single sensor, Sensor I 105, to determine when the container is full. In response, a signal is produced to request the arrival of a tractor unit to remove and replace the trailer. In its simplest arrangement, a communication device 108 in the form of a simple audible and/or visual signal is produced at a suitable location on-site. However, many newsprint sites rely on contractors for removal of waste. Accordingly, in the preferred embodiment, the communication device 108 includes a communications device, such as a modem, programmed to call a remote contractor to request attendance of a tractor unit and replacement of the container.

The control system further comprises a programmer unit 107, by means of which the number of movement cycles of the walking floor 73 in each indexing step can be selectively preset for any one of a plurality of operational modes, each depending upon the respective material being loaded into the container. The number of movement cycles has been determined earlier and takes account of potential slippage between the walking floor 73 and the load during the movement cycle.

For example, in a first operational mode, the container is to be filled with heavy, dense paper, such as whole newspapers, and the walking floor is operated with relatively short indexing steps, corresponding to a low number of movement cycles of the walking floor 73 in each indexing step. However, in a second operational mode, the container is to be filled with a lighter, less dense material, such as shredded paper, and the walking floor is operated with relatively long indexing steps, corresponding to a high number of movement cycles of the walking floor 73 in each indexing step. Each material to be loaded tends to have different loading properties. Therefore to maximize the filling of the container with the respective material, it is necessary to control the loading operation depending on the type of material being loaded.

In order to facilitate correct operation by the user, the programmer unit 107 has a user interface 114 comprising a plurality of mode-selector switches 115, each operable to select a respective operational mode. When each mode-selector switch 115 is operated, the programmer unit 107 automatically selects the respective preset number of movement cycles of the walking floor 73 in each indexing step for that selected operational mode. Therefore the user can readily select, for example, between the loading of whole newspapers or shredded paper. This provides a very user friendly user interface for the correct operation of the container.

The user interface 114 also has a display 116 which indicates to the user the progress of the loading operation. Since the front access doors 12 of the container are closed during loading, it is nor readily possible to view the loading state of the container during the loading operation. The display 116 includes a representation 117 of the trailer and shows plural virtual adjacent compartments 118, together defining the total loading volume of the trailer. Each virtual compartment has associated therewith an indicator 119, such as an illuminatable light source, e.g. an LED, which selectively indicates whether the respective virtual compartment 118 has been loaded. Initially, no indicators 119 are activated. When the first virtual compartment 118 has been loaded, a first indicator 119 is activated, and then successive indicators 119 are activated when successive virtual compartments 118 are filled. When all the indicators 119 are activated, this indicates that the container is full.

This configuration of the control system has a number of advantages.

First, a user may be a worker at a printing plant who knows nothing whatsoever about the structure and operation of the trailer. All he needs to do is select the correct mode-selector switch dependent upon the nature of the material that he is loading into the container. The single control system at the user can correctly control any one of a number of the trailers, because the control system has been preprogrammed based on the nature of the waste being loaded at that particular plant. The user does not need the assistance or even the presence of the trailer operator to operate the system correctly. He merely needs to connect the two cables to the trailer, select the correct mode-selector switch, and load material into the container. The loading is stopped automatically when the trailer is full, and the trailer operator is called automatically to remove the trailer when it is full.

Second, the trailer operator does not need to know the nature of the waste being loaded into the container to ensure correct operation of the trailer. Furthermore, since the control system for each trailer is located at the respective user's plant. and so dedicated to the respective user, each trailer can be used at a number of different user plants, each having different types of waste with correspondingly different indexing steps, without requiring any modification or reprogramming of the trailer. Therefore a single trailer can be used universally at plural user sites without requiring any intervention by the trailer operator.

Third, since each user has its own dedicated control system for loading the trailers with waste, each user can ensure loading of its own types of waste in the most efficient manner, because the dedicated control system has been preprogrammed based on the loading properties of the respective types of waste of that particular user.

Fourth, the user can easily determine the state if the loading operation in the otherwise closed container from the user interface.

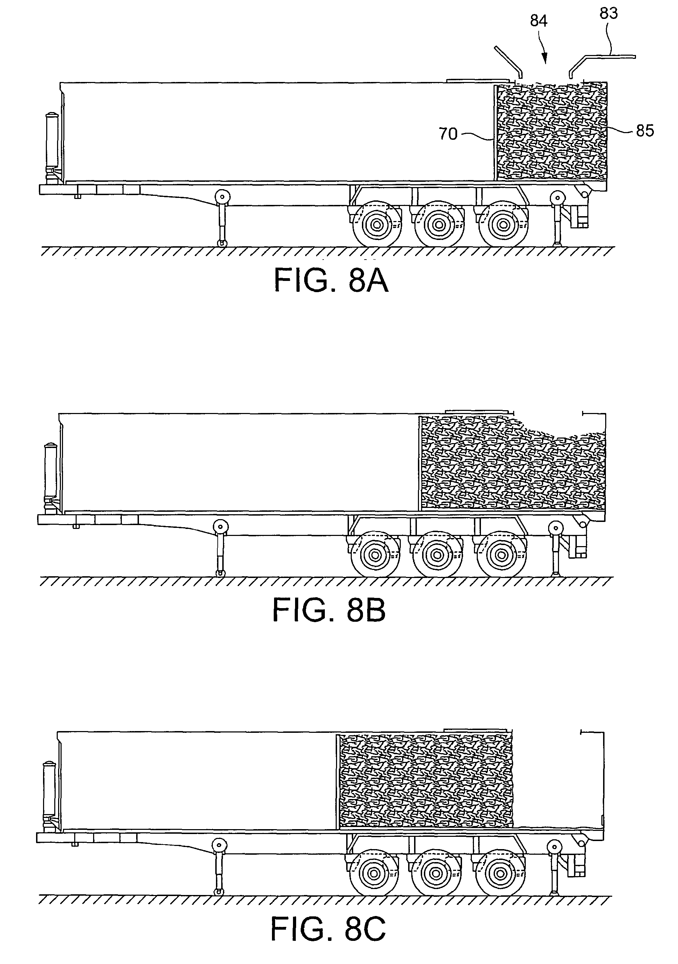

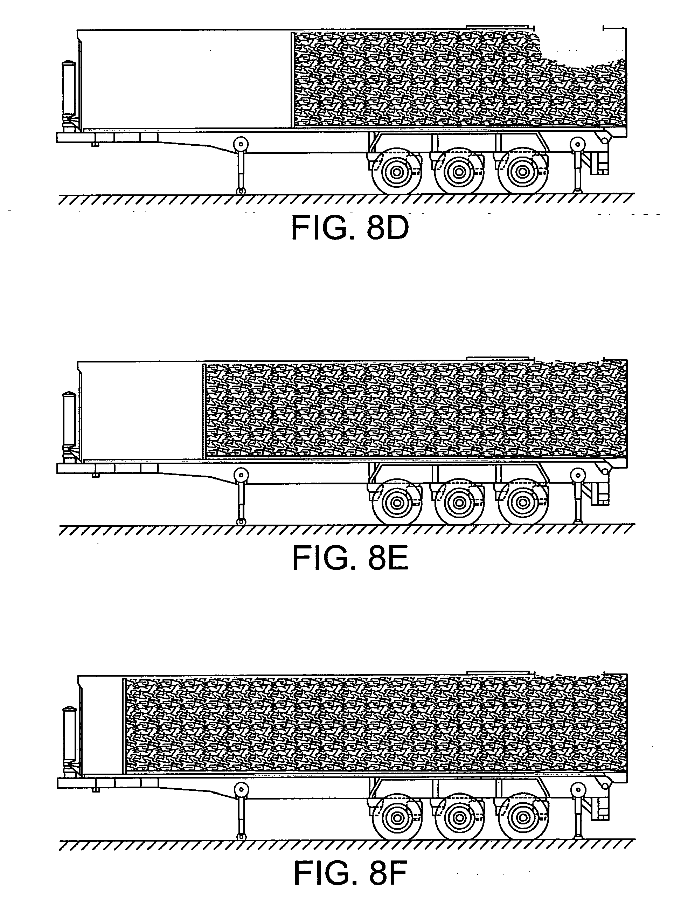

With particular reference to Figures 7 and 8 the process of the present invention will now be explained with reference, by way of example only to a printing works. A lorry comprising a tractor unit 10 and a trailer 11 reverses up to a loading bay 89, of a printing works 82. Newspaper waste is removed from the printing process and delivered along a discharge pathway 83 (which is illustrated only schematically) to a hopper 84. Hopper 84 discharges into a trailer 11, positioned underneath the hopper 84 through open aperture 40 of the hatch in the roof 16 of trailer 11.

In a typical arrangement, however, the printing works 82 will have several hoppers 84 with associated discharge pathways 83, each with a respective trailer 11.

Initially, the transverse headboard 70 will be at the position indicated in Figures 3 and 7a. The hopper 84 discharges waste paper 85 though open aperture 40 into the cavity 71 of the trailer where it falls upon the canvas sheet 72. Being attached to the base of the headboard 70, the weight of waste 85 falling on the canvas sheet 72 acts to prevent the headboard being pushed towards the rear of the trailer as the mass of waste 85 accumulates.

As cavity 71 becomes full, one or more sensors (SENSOR I) mounted about the aperture 40 trigger the control system 100 to power the motor 103, thereby causing actuation of the walking floor 73 to move the contents of the cavity 71 towards the rear wall 17 thereby enlarging cavity 71 (Figure 8b). As described above, the walking floor 73 is moved a distance in an indexing step that is selected by the user. It has been found that with waste paper from a newspaper printing works the weight of the paper is sufficient to compact the mass of waste 85 such that as the mass is advanced towards the rear of the container 13 the mass retains its generally cuboid shape (see Figure 8c). The forward face of the mass 85 does not collapse once it is moved away from contact with the doors 12 of the trailer.

The process is repeated (Figures 8a-e) with the headboard 70 indexing backwardly, in successive indexing steps, towards the rear wall 17 of the trailer until the container 13 is substantially full (Figure 8f) which state is sensed by a Sensor II. Typically, this will involve 5 or 6 indexing steps. In effect, a first cavity 71 (between the headboard and the front access doors) is filled, and then a second virtual cavity, adjacent thereto and between the initial load and the front access doors, is filled, and then a third virtual cavity, adjacent to the second virtual cavity and between the second load and the front access doors, is filled, and so on until the container is completely full. By controlling the filling of each cavity up to its maximum level and by controlling the indexing of the walking floor and the headboard, the container can be filled up to its maximum load reliably and efficiently.

The hatch is then closed and the trailer is then ready to be collected on the next visit of the lorry delivering newsprint. In order to avoid undue delays, in the preferred embodiment, the control system further includes communication means, suitably a modem, for unattended calling for a tractor unit. This is particularly advantageous where removal of waste is dealt with by a remote contractor rather than the owners of the site. At the site where the waste paper is to be discharged, for example at a landfill site or recycling plant, the trailer discharges the waste by means of the walking floor operating in the reverse direction or by means of tipping the container about pivot point 20 by means of ram 25. During discharging, the canvas sheet 72 attached to the bottom edge of the headboard 70 acts to pull the headboard 70 towards the front of the trailer as the waste is discharged.

## Claims

1. A waste collection system in a premises, the system comprising a waste collection bay for receiving a trailer for an articulated lorry, means for loading waste material downwardly into a container of the trailer; and a control system for controlling the operation of a walking floor of the container, the control system being fitted in the premises and comprising a programmer unit for presetting at least one operational mode of the walking floor of the container, and a user interface comprising at least one mode-selector switch for selecting a respective operational mode of the walking floor of the container.

2. A system as claimed in claim 1 wherein the at least one operational mode corresponds to a total distance to be moved by the walking floor in a single movement operation thereof.

3. A system as claimed in claim 2 wherein the programmer unit is programmed whereby a respective total number of reciprocal movements of the walking floor in a single movement operation thereof has been pre-programmed into the programmer unit for the at least one operational mode.

4. A system as claimed in claim 3 wherein the control system further comprises an input for receiving a signal from a movement detector for detecting reciprocal movement of at least one longitudinal slat of the walking floor over a pitch distance.

5. A system as claimed in claim 4 wherein the control system further comprises a counter for counting the number of reciprocal movements of the walking floor, based on the signal from the movement detector.

6. A system as claimed in any one of claims 1 to 5 wherein the user interface further comprises at least one indicator for indicating the filling status of the container.

7. A trailer for an articulated lorry, the trailer including an enclosed elongate material-carrying container, the container having a walking floor, a rear wall and two side walls and a front access door, and a roof which permits material to be loaded from above downwardly into the container and onto the walking floor, the walking floor comprising a plurality of parallel longitudinal slats, each adapted to move back and forth with a reciprocating motion over a respective pitch distance, the walking floor further comprising a movement detector for detecting movement of at least one of the longitudinal slats over the respective pitch distance.

8. A trailer as claimed in Claim 7 wherein the movement detector comprises a contact switch positioned to be switched by movement of the at least one of the longitudinal slats.

9. A trailer as claimed in Claim 7 or Claim 8 wherein the movement detector is positioned so as to contact at least one member connected to the at least one of the longitudinal slats beneath the walking floor.

10. A trailer as claimed in claim 9 wherein the at least one member comprises an interconnecting member connecting together a plurality of first slats extending transversely across the width of the walking floor.
